Europäisches Patentamt

European Patent Office

Office européen des brevets

(11) Publication number: **0 129 881**
**B1**

# EUROPEAN PATENT SPECIFICATION

(45) Date of publication of patent specification: **15.10.86**

(21) Application number: **84107200.2**

(22) Date of filing: **22.06.84**

(51) Int. Cl.⁴: **H 01 M 12/06,** H 01 M 4/86

(54) **Air-cathode button cell.**

(30) Priority: **23.06.83 US 506990**

(43) Date of publication of application:
**02.01.85 Bulletin 85/01**

(45) Publication of the grant of the patent:
**15.10.86 Bulletin 86/42**

(84) Designated Contracting States:
**BE DE FR GB IT NL SE**

(56) References cited:
**US-A-4 022 949**
**US-A-4 262 062**
**US-A-4 404 266**

(73) Proprietor: **RAYOVAC Corporation**
**101 East Washington Avenue**
**Madison Wisconsin 53703 (US)**

(72) Inventor: **Oltman, John**
**1649 S. Sharpes Corners**
**Mt. Horeb, Wisconsin (US)**
Inventor: **Carpenter, Denis Darol**
**1416 Theresa Terrace D.C.**
**Madison, Wisconsin (US)**
Inventor: **Dopp, Robert Brian**
**510 Presidental Lane**
**Madison, Wisconsin (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

Courier Press, Leamington Spa, England.

## Description

### Field of Invention

The invention is concerned with electrochemical cells commonly known as button cells and more particularly with button cells having an air cathode.

### Background of the Invention

In order to place the present invention in proper perspective, applicants deem it desirable to explain that the term button cell refers in general to small electrochemical cells, usually disc-like or pellet-like in appearance and having dimensions, diameter and height measured, with respect to diameter, usually up to about 25 mm and in height up to about 15 mm. Thus, despite the appearance of drawings in patents and scientific articles, button cells are very small objects. In addition, these very small objects must be manufactured with substantial precision to meet ultimate product (powered device) geometric tolerances and to avoid leakage of corrosive electrolytes.

When the button cell includes an air cathode assembly, i.e., a combination of structural and chemical features which permit the oxygen of the air to act as the cathode, the manufacturing problems are compounded. To be specific, in order to function, the cell must have at least one port through which air can enter the cell and unusable nitrogen and other gases can leave. The port must be isolated from the electrolyte and the seal which accomplishes this must be sufficiently tight at cell closure, not only to resist the internal forces tending to force electrolyte through the seal at that time, but also such forces which will exist during cell usage. Internal forces promoting leakage increase during cell usage not only due to elevated temperature and humidity environments but also in the case of a cell having an air cathode, because the mass of ingredients in the cell increases during use. Oxygen from the air ultimately combines with anode material, e.g., zinc, as the cell is used to produce some oxidic form of zinc as a product. As the content of oxidic zinc builds up in the cell, the cell experiences expansion forces which act against the cell sealing means. Accordingly, it is vitally important to manufacture air cells (i.e., cells having an air cathode assembly) with the precision and tolerances which will assure tight, pressure resistant seals over the life of the cells.

Another factor important to air cells is the maximization of anodic active mass in the cell. Because air cells are small, failure to use internal cell space efficiently can result in cell lives that do not meet reasonable user expectations. A still further problem, which must be solved, is that of rapid activation. In storage, before first usage, an air cell normally has a seal over the air entry port. When the cell is put in use, the seal, e.g., a piece of sticky tape, is removed and the cell is put into the device which it powers. The time between removal of the seal and the start of generation of power at the level required by the powered device should be as short as possible, all other conditions being satisfied.

As a final point in setting the proper perspective for the present invention, it is important to note that air cells must be manufactured at a realistic, low cost and in large volume. Thus exotic, expensive or slow-acting solutions to the problem inherent in cell manufacture as a practical matter cannot be used.

### Problem Solved by the Invention

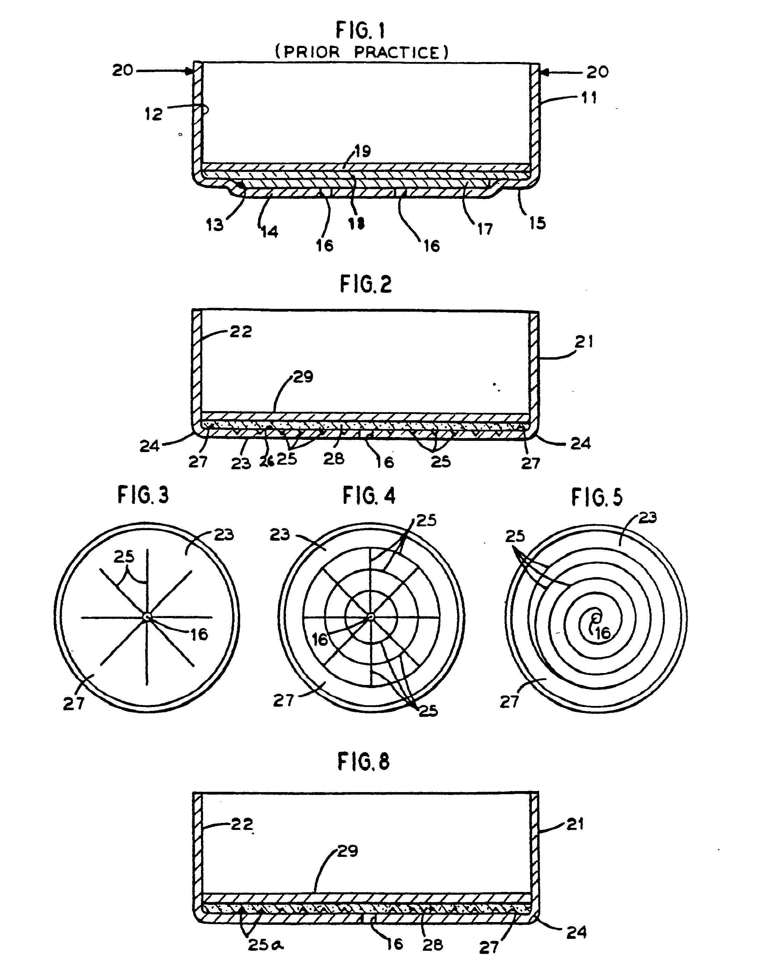

Having thus put the present invention in proper perspective, attention is now directed to Figure 1 of the drawing labelled Prior Practice. In this figure is shown, in section, the cathode can structure of button-type air cells currently used as well as a schematic depiction of the elements of a conventional air cathode assembly. Referring now thereto cathode can 11 made of metal such as nickel plated steel comprises a main hollow-cylindrical body 12 joined to a smaller hollow cylindrical body 13 closed at one end and open at the other end. Smaller hollow cylindrical body 13 is closed by bottom 14 and is joined to hollow cylindrical body 12 by ledge 15. Air entry ports 16 pass through bottom 14. While for descriptive purposes, cathode can 11 is deemed to be made up of the aforenamed elements, those skilled in the art will appreciate that can 11 is made by stamping and/or drawing a single piece of metal and, thus, is an integral object. Inside cathode can 11 are positioned from bottom toward top gas diffuser 17 water repellant membrane 18 (usually made of polytetrafluoroethylene [PTFE]) and catalytic active layer 19. When closed, the conventional cell employing cathode can 11 provides means for applying sealing pressure in the direction of arrows 20 to force membrane 18 in sealing engagement with the interior surface of ledge 15 on which membrane 18 rests.

Bearing in mind that button cells are made to height tolerances dictated by trade practice and end usage, one cannot indiscriminately apply closure pressure to effectuate a good membrane 18-ledge 15 seal. In other words, if tolerances of can 11 are awry, one cannot press the top (not shown) down harder during closure to produce a greater force in the direction of arrows 20 because this will make the product cell too short for commercial use. A similar but opposite result occurs if the top is pressed down with less than usual force during closure to allow for out of tolerances of cathode can 11 in the opposite direction.

It is the object of the present invention to provide a button cell having an air cathode of structural design which minimizes production difficulties, maximizes content of anodic material in the cell, provides for fewer tolerance difficulties and allows for rapid activation once air is permitted access through the air entry port.

## Summary of Invention

The present invention provides for a button cell having an air cathode in which the air cathode assembly is positioned directly against an essentially flat can bottom having an air entry port and is in sealing configuration there against at its periphery. Centerward from a peripheral sealing area either the can bottom, or the abutting surface of the air cathode assembly or both is or are grooved to provide a pattern of grooves terminating at the edge of said peripheral sealing area and communicating with said air entry port to provide gas passages allowing air from said entry port to contact said abutting surface of the air cathode assembly over a much extended area compared to the cross sectional area of said air entry port.

## The Drawings

Figure 2 is a cross sectional view of a cathode can structure of cells of the present invention.

Figures 3 to 7 are plan views of groove patterns useful in the cells of the present invention.

Figures 8 and 9 are cross sectional views of alternative cathode can structures of cells of the present invention.

Figure 10 is a cross sectional view of a cell of the present invention.

## Preferred Embodiment of the Invention

In carrying out the present invention one provides, as depicted in Figure 2, a cathode can 21 comprising a hollow cylinder 22 enclosed at one end by bottom 23 joined to said cylinder 22 in an essentially square, unstepped manner at joint 24. Bottom 23 contains air entry port 16 as in the cans of prior practice. Grooves 25, in a waffle pattern, are provided inside face 26 of can bottom 23 centerward of planar, sealing surface 27 which extends completely around the inside periphery of can bottom 23. While not shown in Figure 2, grooves 25 communicate with air entry port 16 to provide air channels which are in direct contact with a widespread area of the hydrophobic surface 28 of air cathode 29. Figures 3 to 7 show, on a reduced scale, operable groove patterns for the can bottoms of the cells of the present invention. Each of Figures 3 to 7 shows that grooves 25 occupy or are placed in the central region of can bottoms 23 leaving peripheral areas 27 ungrooved.

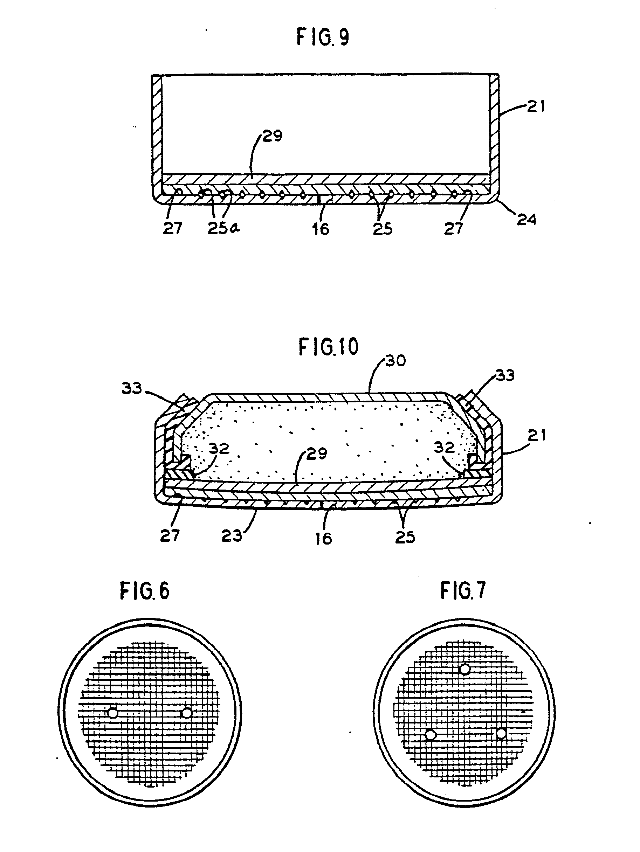

Figure 8 depicts an alternative construction in which cathode can 21 having hollow cylindrical structure 22 integral with flat bottom 23 containing air port 16 has a flat interior surface but is abutted by an air cathode structure 29, the hydrophobic layer 28 of which contains centrally located grooves 25a and flat peripheral area 27 adapted for pressure sealing. A still further alternative construction is depicted in Figure 9, which combines the can grooves 25 of Figure 2 and the hydrophobic layer grooves 25a of Figure 8. As in each of the aforedescribed alternative constructions, peripheral flat abutting areas 27 are provided for sealing purposes.

A completed cell is depicted in Figure 10.

Referring now thereto, cathode can 21, having at least one port 16, and having grooves 25 in bottom 23 thereof, is assembled with air cathode 29 along with anode container 30. Anode container 30 contains anode-electrolyte mass 31, e.g., powdered zinc in aqueous KOH electrolyte and is assembled such that the periphery of the open end thereof is pressed upon insulating ring 32 and the body thereof is electrically isolated from cathode can 21 by grommet material 33 which is squeezed between cathode can 21 inner surface and the outer surface of anode container 30 by deformation of cathode can 21. Those skilled in the art will understand that since cathode can 21 is made of a deforamable metal such as nickel plated steel, deformation of cathode can 21 to enclose and entrap anode container 30 will usually cause a slight, convex curvature of bottom 23 in the assembled cell.

The cell, as depicted in Figure 10, is advantageous in that compared to air cathode cells of prior practice, it may be made en masse with less difficulty and less defects due to out of tolerance product. In addition, seal affected by the compression of ring 32 onto planar surface 27 through separator 34 and air cathode 29 is effective to prevent electrolyte leakage through air entry port 16. The cell of the present invention is also characterized by a greater amount of anode material in any given cell size compared to cells of common prior practice.

## Claims

1. A button cell having air cathode assembly, an anode, an electrolyte and a separator, the cathode assembly, anode, electrolyte and separator being housed in a cell assembly comprising an anode can, the open end thereof extending into a cathode can with a grommet compressed therebetween and wherein, when assembled, the cathode can includes at least one port in the bottom thereof communicating with the exterior of the cell, characterized by a plurality of grooves in at least one of (a) the interior bottom face of the cathode can and (b) the face of the cathode assembly abutting the interior bottom face of the cathode can in the vicinity of the at least one port to thereby define gas diffusion passages communicating with the port and the cathode assembly at a plurality of loci remote from the port, the grooves, terminating at a perimeter within the perimeters of both cathode assembly and the interior bottom face of the cathode can.

2. The button cell as in claim 1 wherein at least one port in the bottom of the cell is centrally located and at least part of the grooves on the interior face of the bottom of the cathode can radiate outwardly from the centrally located port.

3. The button cell as in claim 2 wherein additional grooves are positioned concentrically to at least one port.

4. The button cell as in claim 1 wherein the grooves on the interior face of the bottom of the cathode can are in a waffle pattern.

5. The button cell as in claim 4 which contains a plurality of ports in the bottom thereof.

## Patentansprüche

1. Knopfzelle mit einer Luft-Kathode, einer Anode, einem Elektrolyten und einem Separator, eingeschlossen in einer Zelle aus einem Anodennapf, dessen oberer Teil sich in einen Kathodennapf erstreckt, zwischen welchen sich ein zusammengepreßter Ring befindet, wobei sich in zusammengebautem Zustand in der Kathode zumindest im Boden ein Einlaß in Verbindung mit der Umgebung der Zelle befindet, gekennzeichnet durch eine Vielzahl von Nuten in zumindest einer von

a) der inneren Bodenfläche des Kathodennapfs und

b) der Fläche der Kathode, die gegen die innere Bodenfläche des Kathodennapfs in unmittelbarer Nähe des zumindest einen Durchlasses anliegt, zur Begrenzung eines Gas-Diffusionswegs zwischen dem Durchgang und der Kathode an einer Vielzahl von Stellen im Abstand von dem Durchlaß, wobei die Nuten an einem Umfang innerhalb des Umfangs von sowohl der Kathode als auch der Innenbodenfläche des Kathodennapfs enden.

2. Knopfzelle nach Anspruch 1, bei der sich zumindest ein Durchlaß in der Mitte des Zellenbodens befindet und zumindest ein Teil der Nuten an der Bodeninnenfläche des Kathodennapfs sich von dem mittigen Durchlaß radial nach außen erstrecken.

3. Knopfzelle nach Anspruch 2, in der zusätzliche Nuten konzentrisch zu mindestens einem Durchlaß angeordnet sind.

4. Knopfzelle nach Anspruch 1, worin die Nuten an der inneren Bodenfläche des Kathodennapfs in waffelartigem Muster angeordnet sind.

5. Knopfzelle nach Anspruch 4, enthaltend im Boden eine Vielzahl von Durchlässen.

## Revendications

1. Pile bouton ayant un ensemble de cathode à air, une anode, un électrolyte et un séparateur, l'ensemble de cathode, l'anode, l'électrolyte et le séparateur étant logés dans un assemblage de pile comprenant un boîtier anodique, dont l'extrémité ouverte s'étend dans un boîtier de cathode avec une bague d'étoupe comprimée entre eux et dans laquelle, quand elle est assemblée, le boîtier de cathode inclut au moins un orifice dans son fond communiquant avec l'extérieur de la pile, caractérisée par une pluralité de sillons dans au moins une des deux faces (a) la face interne du fond du boîtier de cathode et (b) la face de l'ensemble de cathode s'appuyant sur la face interne du fond du boîtier de cathode au voisinage d'au moins un orifice pour délimiter ainsi des passages de diffusion de gaz communiquant avec l'orifice et l'ensemble de cathode à une pluralité d'endroits éloignés de l'orifice, les sillons se terminant sur un périmètre compris entre les périmètres d'à la fois l'ensemble de cathode et de la face interne du fond du boîtier de cathode.

2. Pile bouton selon la revendication 1, dans laquelle au moins un orifice dans le fond de la pile est localisé en position centrale et au moins une partie des sillons sur la face interne du fond du boîtier de cathode rayonnent vers l'extérieur depuis l'orifice localisé en position centrale.

3. Pile bouton selon la revendication 2, dans laquelle des sillons additionnels sont disposés de façon concentrique vis-à-vis d'au moins un orifice.

4. Pile bouton selon la revendication 1, dans laquelle les sillons de la face interne du fond du boîtier de cathode sont en forme de gaufre.

5. Pile bouton selon la revendication 4, qui contient une pluralité d'orifices dans son fond.

0 129 881

FIG. 1
(PRIOR PRACTICE)

FIG. 2

FIG. 3

FIG. 4

FIG. 5

FIG. 8

1

FIG. 9

FIG.10

FIG. 6

FIG.7